# EUROPÄISCHE PATENTANMELDUNG

(11) **EP 2 119 383 A1**
(43) Veröffentlichungstag der Anmeldung: **18.11.2009**
(21) Anmeldenummer: 08009017.8
(22) Anmeldetag: 15.05.2008
(51) Int. Cl.: A47J 31/22

(54) **Brühmaschine**

(71) Anmelder: Tchibo GmbH, 22297 Hamburg (DE)
(72) Erfinder: Schumann, Jörn, 21465 Reinbek (DE)
(74) Vertreter: UEXKÜLL & STOLBERG

(57) **Zusammenfassung**

Eine Brühmaschine (1) enthält eine Heißwassereinrichtung (16) zur Bereitstellung von Heißwasser, eine Dreheinrichtung (10, 14) für einen Brühsubstanzträger (2) und eine Auffangeinrichtung (20), die den Brühsubstanzträger (2) umgibt. Der Brühsubstanzträger kann als von der Brühmaschine (1) unabhängige Portionskapsel (2), aber auch als Bestandteil der Brühmaschine ausgestaltet sein. Die Auffangeinrichtung (20) fängt unter Zentrifugalkräften aus dem Brühsubstanzträger (2) austretendes Brühgetränk auf und leitet es zu einem Auslass (24). Die Brühmaschine (1) weist eine Steuerung auf, mit der die Dreheinrichung (10, 14) in mindestens zwei verschiedenen, vorwählbaren Geschwindigkeitsbereichen betrieben werden kann, die verschiedenen Druckbereichen entsprechen.

## Beschreibung

Die Erfindung betrifft eine Brühmaschine zur Extraktion einer Brühsubstanz mittels Heißwasser sowie ein System mit einer derartigen Brühmaschine und einer Portionskapsel.

Brühmaschinen zur Extraktion einer Brühsubstanz mittels Heißwasser sind in zahlreichen Ausführungsformen bekannt, insbesondere zum Zubereiten von Kaffeegetränken. Filterkaffee wird drucklos oder bei niedrigem Brühdruck hergestellt, z.B. mit Hilfe von Kaffeepulver, das in einen Kaffeefilter eingefüllt wird oder in einem Kaffeepad enthalten ist. Espresso wird dagegen bei hohem Brühdruck extrahiert. Dazu können fein gemahlenes Kaffeepulver (Typ Espresso) oder Espressopads in eine unter Druck betriebene Brühkammer eingefüllt bzw. eingelegt werden, oder das Espressopulver wird in einer druckfesten Portionskapsel bereitgestellt. Der zum Aufbrühen und Aufschäumen von Caffè Crema benutzte Druckbereich liegt zwischen dem für Filterkaffee und für Espresso. Zum Aufbrühen von Caffè Crema kommen ebenfalls Portionskapseln oder speziell durch Mahlung und Röstung abgestimmtes Kaffeepulver zum Einsatz. Allein für die Verwendung mit Portionskapseln gibt es eine große Zahl unterschiedlicher Brühmaschinen, die alle mehr oder weniger aufwändig konstruiert sind.

Aus der WO 2006/053635 A1 ist eine Kaffeemaschine bekannt, die mit Portionskapseln in verschiedenen voreinstellbaren Druckbereichen für das Brühwasser betrieben werden kann. Diese Kaffeemaschine enthält eine Druckwassereinrichtung, bei der sich der gewünschte Druck über die Ansteuerung einer Wasserpumpe erreichen lässt. Die Konstruktion ist aufwändig. So erfordert der hohe Maschinendruck eine entsprechende Auslegung der Maschine mit einer Hochdruckpumpe, einem druckfesten Boiler und druckfesten Rohrleitungen aus entsprechenden Materialien, was sich in relativ hohen Produktionskosten niederschlägt.

Auf dem Markt ist eine Teemaschine erhältlich, bei der in einen zu einer Drehbewegung angetriebenen Substanzträger drucklos Brühwasser eingegeben wird. Durch Zentrifugalkräfte entsteht dabei ein Druck, der das Brühwasser über die in den Substanzträger eingegebenen Teeblätter zu einer Mantelfläche des Substanzträgers treibt. Dort kann das fertige Getränk über kleine Öffnungen aus dem Substanzträger austreten. Das Getränk wird aufgefangen und zu einem Auslass geleitet.

Es ist Aufgabe der Erfindung, eine Brühmaschine zur Extraktion einer Brühsubstanz mittels Heißwasser zu schaffen, die ohne den für die Bereitstellung von Druckwasser benötigten Aufwand konstruiert ist und mit der Heißgetränke in verschiedenen Druckbereichen bis hin zum Espresso bereitgestellt werden können.

Diese Aufgabe wird gelöst durch eine Brühmaschine zur Extraktion einer Brühsubstanz mittels Heißwasser mit den Merkmalen des Anspruchs 1. Der Anspruch 10 betrifft ein System aus einer Ausführungsform einer derartigen Brühmaschine und einer Portionskapsel. Vorteilhafte Ausgestaltungen der Erfindung ergeben sich aus den abhängigen Ansprüchen.

Die erfindungsgemäße Brühmaschine zur Extraktion einer Brühsubstanz mittels Heißwasser weist eine Heißwassereinrichtung auf, die zur Bereitstellung von Heißwasser eingerichtet ist. Ferner ist eine Dreheinrichtung für einen Brühsubstanzträger vorgesehen, die von einem Antrieb zu einer Rotationsbewegung um eine Drehachse antreibbar ist. Dabei kann der Brühsubstanzträger eine Komponente der Brühmaschine sein, aber auch als von der Brühmaschine unabhängige Portionskapsel ausgestaltet sein.

Ein von der Dreheinrichtung angetriebener Brühsubstanzträger ist von einer Auffangeinrichtung umgeben, die unter der Wirkung von Zentrifugalkräften aus dem Brühsubstanzträger austretendes Brühgetränk auffängt und zu einem Auslass leitet, den das Brühgetränk unter der Wirkung der Schwerkraft passieren kann. Mit einer Steuerung lässt sich die Dreheinrichtung in mindestens zwei verschiedenen, vorwählbaren Geschwindigkeitsbereichen antreiben.

Beim Betrieb der erfindungsgemäßen Brühmaschine tritt das Heißwasser, das mit der Heißwassereinrichtung im Prinzip drucklos bereitgestellt werden kann, in den Brühsubstanzträger ein, in dem sich die Brühsubstanz befindet. Durch die bei der Drehbewegung des Brühsubstanzträgers auftretenden Zentrifugalkräfte werden das Brühwasser und die Brühsubstanz nach außen gedrückt. Es kommt also zu einem Druckaufbau, der dieselbe Wirkung hat wie ein in herkömmlicher Weise mit Hilfe einer Pumpe erzeugter Druck. Beim größten radialen Abstand von der Drehachse ist der Druck in dem Brühsubstanzträger am größten. Aus der Brühsubstanz wird dabei das Brühgetränk extrahiert, das durch Öffnungen aus dem Brühsubstanzträger austreten kann und von der Auffangeinrichtung zu dem Auslass abfließt. Unter dem Auslass kann eine Auffangbehälter platziert werden, z.B. eine Tasse oder eine Kanne.

Die erfindungsgemäße Brühmaschine benötigt also keine aufwändige Einrichtung zur Bereitstellung von Heißwasser unter Druck. Trotzdem lassen sich damit Getränke wie Espresso herstellen. Da die Dreheinrichtung in verschiedenen Geschwindigkeitsbereichen angetrieben werden kann, ist die Brühmaschine zum Aufbrühen unterschiedlicher Getränke geeignet.

Insbesondere kann die Steuerung dazu eingerichtet sein, die Dreheinrichtung in drei verschiedenen, vorwählbaren Geschwindigkeitsbereichen anzutreiben, um an dem Brühsubstanzträger unterschiedlich große Zentrifugalkräfte zu erzeugen, die einem Brühdruck zum Brühen von Filterkaffee (z.B. etwa 1 bar bis 3 bar), einem Brühdruck zum Brühen von Caffè Crema (z.B. etwa 3 bar bis 10 bar) und einem Brühdruck zum Brühen von Espresso (z.B. etwa 10 bar bis 18 bar) entsprechen.

Bei bevorzugten Ausführungsformen ist die Drehachse im Wesentlichen vertikal ausgerichtet, also senkrecht zur Horizontalen. Dies ermöglicht eine effiziente Ausnutzung der Schwerkraft beim Eingeben des Heißwassers in den Brühsubstanzträger und beim Abfließen des Brühgetränks durch den Auslass. Eine sichere Funktionsweise der Brühmaschine lässt sich aber auch erreichen, wenn die Drehachse in einem anderen Winkel zur Horizontalen angeordnet ist.

Wenn der Brühsubstanzträger eine Komponente der Brühmaschine ist, ist er vorzugsweise von der Dreheinrichtung separierbar, was das Befüllen mit Brühsubstanz und das Reinigen nach Verwendung der Brühmaschine erleichtert. In bevorzugten Ausführungsformen hat der Brühsubstanzträger eine zylinderähnliche Form mit einem Mantel und einer mit der Drehachse zusammenfallenden Längsachse, wobei der Mantel mit Durchtrittsöffnungen für das Brühgetränk versehen ist. Diese Durchtrittsöffnungen können als Filteröffnungen ausgestaltet sein, d.h. sie sind so klein, dass sie z.B. Kaffeepartikel weitgehend oder vollständig zurückhalten. Es ist aber auch denkbar, in den Brühsubstanzträger z.B. einen Papierfilter einzusetzen, der mit Brühsubstanz befüllt wird; in diesem Fall können die Durchtrittsöffnungen im Mantel des Brühsubstanzträgers größer ausgelegt sein. Vorzugsweise weist der Brühsubstanzträger eine Bodenstruktur und einen Deckel auf, über den der Innenraum des Brühsubstanzträgers mit Brühsubstanz befüllbar ist und der für das Heißwasser durchgängig ist. Für einen Heißwassereinlauf ist eine zentrale Öffnung in dem Deckel besonders geeignet, da sich deren Position bei der Drehbewegung des Brühsubstanzträgers nicht verändert.

Wenn der Brühsubstanzträger eine Komponente der Brühmaschine ist, kann die Brühmaschine auch mit weiteren Komponenten versehen sein, die den Gebrauchswert erhöhen. Hierzu zählt insbesondere eine Brühsubstanzquelle, die über eine Brühsubstanzleitung mit dem Brühsubstanzträger in Verbindung steht. Als Brühsubstanzquelle können z.B. ein Vorratsbehälter für eine Sorte Mahlkaffee oder auch Vorratsbehälter für mehrere Sorten Mahlkaffee dienen. Im letzteren Fall kann der Benutzer die gewünschte Sorte durch Knopfdruck auswählen. Ferner kommt als Brühsubstanzquelle ein Mahlwerk für Kaffeebohnen in Betracht, auch mit einem oder mehreren vorgeschalteten Vorratsbehältern für Kaffeebohnen. Der Brühsubstanzleitung kann ein Brühsubstanzportionierer zugeordnet sein, um eine möglichst genau vorgegebene Brühsubstanzmenge in den Brühsubstanzträger einzuführen.

Wie bereits erwähnt, kann die Brühmaschine auch so konzipiert sein, dass der Brühsubstanzträger keine Komponente der Brühmaschine ist, sondern als eine in die Dreheinrichtung einsetzbare Portionskapsel ausgestaltet ist, die eine Brühsubstanz enthält.

Vorzugsweise hat die Portionskapsel eine zylinderähnliche Grundform mit einem Mantel, einem Deckel und einem Boden. Der Deckel kann z.B. mit einem flanschartig nach außen vorspringenden Rand, der vom oberen Ende des Mantels ausgeht, verklebt oder verschweißt sein.

Damit das Brühgetränk unter der Wirkung der beim Betrieb der Brühmaschine auftretenden Zentrifugalkräfte aus dem Brühsubstanzträger austreten kann, muss der Mantel der Portionskapsel mit Öffnungen oder Perforationen versehen sein oder versehen werden. Da die Brühsubstanz in der Portionskapsel frischgehalten werden sollte, ist es zweckmäßig, wenn diese Öffnungen oder Perforationen erst unmittelbar vor Gebrauch der Portionskapsel wirksam werden.

Hierfür kann die Brühmaschine eine Perforiereinrichtung aufweisen, mit der sich der Mantel einer in die Drehrichtung eingesetzten Portionskapsel mit einer Anzahl von Perforationen versehen lässt. Vorzugsweise weist die Perforiereinrichtung eine Anzahl von Perforationsnadeln auf, die allgemein radial zur Drehachse der Dreheinrichtung auf die Drehachse zu verschiebbar sind. Diese Perforationsnadeln durchdringen beim Vorschieben den Mantel der Portionskapsel und erzeugen dabei die gewünschten Öffnungen. Anschließend können die Perforationsnadeln wieder in ihre Ausgangsposition zurückgezogen werden.

Bei einer anderen Möglichkeit ist der Mantel der Portionskapsel bereits im Lieferzustand mit einer Anzahl von Perforationen versehen, die im Lieferzustand von einer entfernbaren Abdeckung verschlossen sein können. In diesem Fall zieht der Benutzer die Abdeckung von der Portionskapsel ab, bevor er die Portionskapsel in die Dreheinrichtung einsetzt.

Wenn Portionskapseln verwendet werden, weist die Brühmaschine vorzugsweise einen mit der Heißwassereinrichtung in Verbindung stehenden und zur Drehachse der Dreheinrichtung ausgerichteten Injektor auf, mit dem der Deckel einer in die Dreheinrichtung eingesetzten Portionskapsel perforiert und Heißwasser in den Innenraum der Portionskapsel eingespritzt werden kann.

Portionskapseln können in unterschiedlichen Sorten bereitgestellt werden, z.B. zum Brühen von Filterkaffee, zum Brühen von Caffè Crema und zum Brühen von Espresso. Solche Portionskapseln sind mit einer für die jeweilige Anwendung geeigneten Kaffeesorte gefüllt. Nach dem Einsetzen einer jeweiligen Portionskapsel in die Dreheinrichtung wählt der Benutzer den zugeordneten Brühdruck, d.h. den zugeordneten Geschwindigkeitsbereich der Dreheinrichtung aus, um das gewünschte Getränk zu erhalten. Es ist auch denkbar, dass die Brühmaschine die Sorte der eingesetzten Portionskapsel automatisch erfasst (z.B. über einen an der Außenseite der Portionskapsel angeordneten Barcode oder über die Farbe der Portionskapsel) und den geeigneten Geschwindigkeitsbereich selbsttägig auswählt.

Die Kontaktzeit des Heißwassers mit der Brühsubstanz, die etwaige Ausbildung von Crema und der Geschmack des Brühgetränks werden insbesondere durch die Wassermenge, den Mahlgrad (bei Kaffee als Brühsubstanz) und die Rotationsgeschwindigkeit der Dreheinrichtung bestimmt.

Die besonderen Vorteile der erfindungsgemäßen Brühmaschine wurden teilweise bereits genannt. So muss die Brühmaschine nicht mehr auf einen hohen Brühdruck ausgelegt werden, was z.B. einen Verzicht auf eine Hochdruckpumpe und für Hochdruck ausgelegte Heizkreisläufe sowie den Einsatz von Kunststoffleitungen ermöglicht und somit die Kosten senkt. Ferner tropft nach Beendigung des Brühvorgangs der Brühsubstanzträger bzw. die Portionskapsel nicht oder praktisch nicht nach, weil dann etwaige Restflüssigkeit nicht mehr durch Zentrifugalkräfte durch seitliche Öffnungen aus dem Brühsubstanzträger bzw. der Portionskapsel herausgedrückt werden kann, sondern sich in deren Bodenbereich ansammelt. In einem geeigneten Geschwindigkeitsbereich der Dreheinrichtung wird die Ausbildung einer stabilen Crema ermöglicht. Bei langsamer Rotation, die einem geringen Brühdruck entspricht, entsteht wenig Crema, wie in Deutschland für Filterkaffee erwünscht. Andererseits lassen sich bei hoher Geschwindigkeit problemlos hohe Drücke erzielen und bei Bedarf sogar höhere Drücke als in einer herkömmlichen Espressomaschine.

Schließlich soll noch ein weiterer Vorteil der erfindungsgemäßen Brühmaschine erwähnt werden, der darin besteht, dass das Mahlgut (insbesondere bei Espresso) nicht mehr verpresst werden muss. In einem herkömmlichen Halbautomaten mit einem Siebträger muss dass Kaffeepulver manuell in den Siebträger gepresst werden, damit eine gleichmäßige Durchfeuchtung und ein gleichmäßiger Druckaufbau erfolgen. In einem herkömmlichen Vollautomaten wird dies durch eine aufwändige Mechanik vorgenommen. Bei der Erfindung dagegen kann auf diesen Vorgang und die dafür notwendige Einrichtung verzichtet werden, da sich durch die Rotation und die dadurch entstehende Zentrifugalkraft loses Mahlgut gleichmäßig an die Wandung des Brühsubstanzträgers anlegt. Dadurch erreicht man eine weitere Kostenersparnis.

Im Folgenden wird die Erfindung anhand von Ausführungsbeispielen weiter beschrieben. Die Zeichnungen zeigen in
- Figur 1: eine schematische Darstellung wesentlicher Teile ei- ner Ausführungsform der erfindungsgemäßen Brühmaschi- ne, bei der eine Portionskapsel als Brühsubstanzträ- ger verwendet wird, und
- Figur 2: eine schematische Darstellung wesentlicher Teile ei- ner anderen Ausführungsform der erfindungsgemäßen Brühmaschine, bei der der Brühsubstanzträger eine Komponente der Brühmaschine ist.

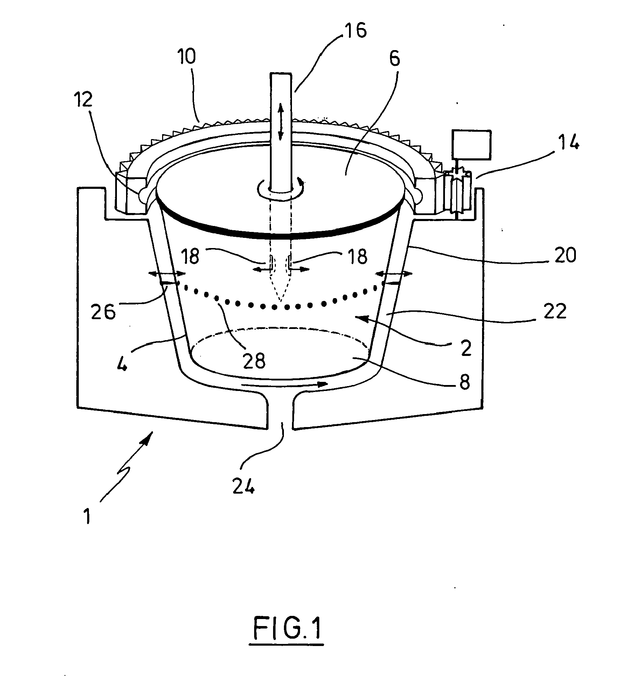

In Figur 1 sind in schematischer Weise die für die Erfindung wesentlichen Teile einer Ausführungsform einer Brühmaschine 1 zur Extraktion einer Brühsubstanz mittels Heißwasser dargestellt. Als Brühsubstanzträger dient eine Portionskapsel 2, die selbst keine Komponente der Brühmaschine 1 ist und zusammen mit der Brühmaschine 1 ein System bildet.

Die Portionskapsel 2 ist ein herkömmlicher Weise aufgebaut und weist einen Mantel 4, einen Deckel 6 und einen Boden 8 auf. Der Mantel 4 läuft leicht konisch nach unten zu und ist einstückig mit dem Boden 8 aus Kunststoff gefertigt. Am oberen Ende des Mantels 4 springt ein flanschartiger Ring etwas nach außen vor, auf dem der Deckel 6 aufgesiegelt ist. Im Ausführungsbeispiel besteht der Deckel 6 aus Aluminiumfolie. Die Brühsubstanz (z.B. Mahlkaffee zum Brühen von Filterkaffee, zum Brühen von Caffè Cremä oder zum Brühen von Espresso) ist im Innenraum der Portionskapsel 2 enthalten. Ferner kann die Portionskapsel 2 in ihrem Innenraum noch andere Einrichtungen aufweisen, z.B. eine Verteilereinrichtung für das Brühwasser oder eine Siebeinrichtung für das aus der Portionskapsel 2 austretende Brühgetränk, was aber in Figur 1 nicht gezeigt ist.

Die Portionskapsel 2 ist in der Darstellung gemäß Figur 1 in eine Dreheinrichtung 10 eingesetzt. Im Ausführungsbeispiel weist die Dreheinrichtung 10 einen Zahnkranz auf, an dessen Innenseite eine Ausnehmung 12 ausgebildet ist. Der Zahnkranz 10 ist im Ausführungsbeispiel zweiteilig aufgebaut, wobei die beiden Teile an einem Ende gelenkig miteinander verbunden sind und am anderen Ende etwas gegeneinander aufgeklappt werden können, um die Portionskapsel 2 so einzusetzen, dass der Rand ihres Deckels 6 mit dem erläuterten flanschartigen Ring nach Gegeneinanderklappen und Verriegeln der beiden Teile des Zahnkranzes 10 in der Ausnehmung 12 ruht und festgeklemmt ist.

Der Zahnkranz 10 der Dreheinrichtung kann von einem Antrieb in Rotation versetzt werden. Von diesem Antrieb ist in Figur 1 ein Zahnrad 14 eingezeichnet. Weitere Komponenten sind ein Motor und eine Steuerung. Unter der Wirkung des Antriebs kann sich der Zahnkranz 10 mit der darin eingesetzten Portionskapsel 2 um eine Drehachse drehen.

In Figur 1 ist diese Drehachse durch die Längsachse eines Injektors 16 markiert. Der Injektor 16 ist als Hohlnadel konstruiert und weist kurz über einer Spitze am unteren Ende zwei Austrittsöffnungen 18 auf, aus denen Heißwasser austreten kann. An seinem oberen Ende ist der Injektor 16 über einen flexiblen Schlauch mit einem Boiler verbunden, der eine Komponente einer Heißwassereinrichtung der Brühmaschine 1 zur Bereitstellung von Heißwasser ist. Diese Teile sind in herkömmlicher Weise konstruiert und in Figur 1 nicht dargestellt.

Der Injektor 16 lässt sich längs der Drehachse des Zahnkranzes 10 der Dreheinrichtung nach oben und unten verschieben, wie in Figur 1 durch den Doppelpfeil dargestellt.

Die Portionskapsel 2 ist von einer trichterartigen Auffangeinrichtung 20 umgeben, wobei zwischen deren Innenwandung und dem Mantel 4 ein Zwischenraum 22 vorgesehen ist. Am unteren Ende der Auffangeinrichtung 20 befindet sich ein Auslass 24, der z.B. über ein kurze Leitung (die in Figur 1 nicht dargestellt ist) aus der Brühmaschine 1 herausgeführt ist und das Brühgetränk z.B. zu einer darunter gestellten Tasse führt.

Im Mantel- oder Seitenbereich der Auffangeinrichtung 20 ist eine Anzahl von verschiebbaren Perforationsnadeln 26 gelagert, die über einen in Figur 1 nicht dargestellten Mechanismus radial nach innen verschoben werden können und dabei Perforationen 28 in dem Mantel 4 der Portionskapsel 2 erzeugen. Danach werden die Perforationsnadeln 26 wieder radial nach außen zurückgefahren.

Im Folgenden wird die Betriebsweise der Brühmaschine 1 zusammengefasst.

Zunächst setzt der Benutzer eine frische und noch allseitig geschlossene Portionskapsel 2 in den Zahnkranz 10 der Dreheinrichtung ein und verriegelt den Zahnkranz. Der Injektor 16 ist zu diesem Zeitpunkt nach oben gefahren und stört daher bei diesem Vorgang nicht. Anschließend setzt der Benutzer die Brühmaschine 1 in Betrieb. Dabei wird zunächst der Injektor 16 nach unten vorgeschoben, bis er die in Figur 1 dargestellte Position erreicht hat, und durchdringt dabei den Deckel 6 der Portionskapsel 2. Ferner werden die Perforationsnadeln 26 radial nach innen geschoben und anschließend wieder zurückgezogen, wobei die Perforationen 28 entstehen.

Nun versetzt der Antrieb 14 die Dreheinrichung mit dem Zahnkranz 10 und der darin eingeklemmten Portionskapsel 2 in eine schnelle Rotationsbewegung. Die Drehgeschwindigkeit ist dabei durch das von dem Benutzer ausgewählte Programm über die Steuerung der Brühmaschine 1 vorgegeben. Im Ausführungsbeispiel bietet die Brühmaschine 1 die Möglichkeit, aus drei verschiedenen Programmen auszuwählen, und zwar zum Brühen von Filterkaffee, zum Brühen von Caffè Crema und zum Brühen von Espresso. In jedem dieser Programme wird die Dreheinrichtung in einem vorgegebenen Geschwindigkeitsbereich betrieben. Während des gesamten Programmablaufs braucht die Geschwindigkeit nicht konstant zu sein, sondern kann in vorgegebener Weise hochgefahren, gehalten (und dabei je nach Programmablauf gegebenenfalls auch variiert) und wieder herabgefahren werden. Für die drei genannten Kaffeesorten sind die vorgegebenen Geschwindigkeitsbereiche unterschiedlich. Insbesondere unterscheiden sie sich in der Höchstgeschwindigkeit, die bei Filterkaffee am niedrigsten und bei Espresso am höchsten ist.

Wenn sich die Portionskapsel 2 um die mit der Längsachse des Injektors 16 zusammenfallende Drehachse dreht, entsteht durch die dabei auftretenden Zentrifugalkräfte ein Druck in der Portionskapsel 2, der in radialer Richtung nach außen ansteigt. Das durch den Injektor 16 und die Austrittsöffnungen 18 in die Portionskapsel 2 eintretende Brühwasser wandert dabei radial nach außen, extrahiert die Brühsubstanz und tritt schließlich durch die Perforationen 28 am Mantel 4 aus der Portionskapsel 2 aus. Das Brühgetränk wird dabei von der Auffangeinrichtung 20 aufgefangen und fließt unter der Wirkung der Schwerkraft zu dem Auslass 24 und von dort z.B. in ein Gefäß.

Im Ausführungsbeispiel sind die Perforationen 28 so klein, dass sie einen Austritt der Brühsubstanz aus der Portionskapsel 2 weitgehend verhindern.

Nach Beendigung des Brühvorgangs wird der Injektor 16 nach oben verfahren, und der Benutzer kann die verbrauchte Portionskapsel 2 aus dem Zahnkranz 10 der Dreheinrichtung herausnehmen. Reste von Brühwasser bzw. Brühgetränk sammeln sich nach dem Abschalten der Dreheinrichtung über dem Boden 8 und tropfen daher nicht in unerwünschter Weise aus den Perforationen 28 heraus.

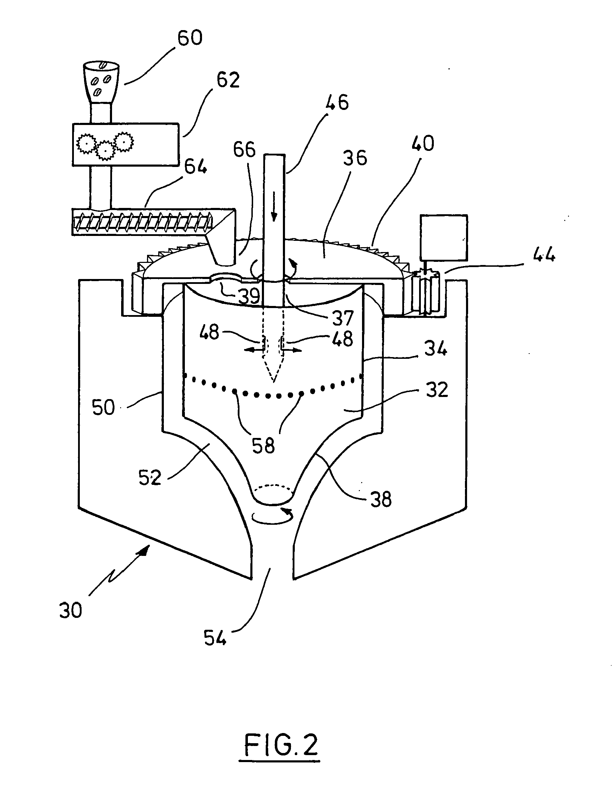

In Figur 2 sind in schematischer Weise die für die Erfindung wesentlichen Teile einer zweiten Ausführungsform der Brühmaschine dargestellt, die hier mit 30 bezeichnet ist. Die Brühmaschine 30 wird nicht mit als Verbrauchsartikel konzipierten Portionskapseln betrieben, sondern weist einen Brühsubstanzträger 32 auf, der ein Bestandteil der Brühmaschine 30 ist.

Der Brühsubstanzträger 32 enthält einen im Ausführungsbeispiel zylinderförmigen Mantel 34, dessen offenstehende Oberseite durch einen Deckel 36 mit einer zentralen Öffnung 37 abgedeckt ist. Im unteren Bereich ist der Mantel 34 einstückig mit einer Bodenstruktur 38 verbunden, die sich im Ausführungsbeispiel nach unten zu verjüngt.

Der Deckel 36 enthält neben der zentralen Öffnung 37 eine weitere Öffnung 39. Er hat nicht nur die Funktion eines Deckels für den Brühsubstanzträger 32, sondern ist gleichzeitig Bestandteil einer Dreheinrichtung und geht daher in seinem peripheren Bereich in einen Zahnkranz 40 über. Der Zahnkranz 40 kämmt mit einem Zahnrad 44 eines Antriebs, dessen weitere Komponenten (wie insbesondere ein Motor und eine Motorsteuerung) in Figur 2 nicht dargestellt sind. Der Zahnkranz 40 ist für eine Drehbewegung um eine Achse gelagert, die mit der Längsachse eines in Figur 2 eingezeichneten Heißwassereinlaufs 46 zusammenfällt.

Im Ausführungsbeispiel ist der Deckel 36 (einschließlich Zahnkranz 40) über eine lösbare Arretierung (in Figur 2 nicht eingezeichnet) mit dem Mantel 34 des Brühsubstanzträgers 32 verbunden. Der Benutzer kann den Brühsubstanzträger 32 mit dem Deckel 36 und dem Zahnkranz 40 aus der Brühmaschine 30 z.B. für Reinigungszwecke herausnehmen und öffnen.

Der Heißwassereinlauf 46 ragt durch die zentrale Öffnung 37 im Deckel 36 in den Innenraum des Brühsubstanzträgers 32. Über Austrittsöffnungen 48 kann von der Brühmaschine 30 zubereitetes Heißwasser den Heißwassereinlauf 46 verlassen, um in dem Brühsubstanzträger 32 befindliche Brühsubstanz aufzubrühen. Der Heißwassereinlauf 46 lässt sich nach oben schieben oder verfahren, um ein Herausnehmen des Brühsubstanzträgers 32 aus der Brühmaschine 30 zu erleichtern.

Der Brühsubstanzträger 32 ist von einer Auffangeinrichtung 50 umgeben, die durch Öffnungen in dem Mantel 34 aus dem Brühsubstanzträger 32 austretendes Brühgetränk auffängt und in einem Zwischenraum 52 zu einem Auslass 54 leitet. Unter dem Auslass 54 kann z.B. eine Tasse zum Auffangen des Brühgetränks aufgestellt werden.

Die Öffnungen in dem Mantel 34 sind im Ausführungsbeispiel in Form einer Reihe von Durchtrittsöffnungen 58 ausgestaltet. Andere Anordnungen dieser Öffnungen sind ebenfalls denkbar.

Soweit bisher beschrieben, könnte der Benutzer den Brühsubstanzträger 32 aus der Brühmaschine 30 herausnehmen und den Deckel 36 öffnen, um den Brühsubstanzträger 32 mit Brühsubstanz zu füllen.

Die in Figur 2 dargestellte Ausführungsform der Brühmaschine 30 bietet jedoch dem Komfort, die Brühsubstanz direkt in den Brühsubstanzbehälter 32 einzufüllen. Dazu ist ein Vorratsbehälter 60 vorgesehen, der z.B. mit Kaffeebohnen befüllt ist. Der Benutzer kann Kaffeebohnen aus dem Vorratsbehälter 60 in einem elektrischen Mahlwerk 62 mahlen lassen, und das Mahlgut wird über einen Schneckenförderer und -portionierer 64 zu einem Ausgang 66 geleitet, der über der Öffnung 39 in dem Deckel 36 angeordnet ist. Im Ausführungsbeispiel kann der Benutzer über ein Bedienungsfeld der Brühmaschine 30 den gewünschten Mahlgrad und die gewünschte Menge an Mahlgut einstellen. Die Steuerung der Brühmaschine 30 sorgt dafür, dass die Öffnung 39 dann, wenn Mahlgut in den Brühsubstanzträger 32 eingefüllt werden soll, immer unterhalb des Ausgangs 66 angeordnet ist. Dies lässt sich erreichen, indem der Zahnkranz 40 mit Hilfe des Antriebs 44 so lange langsam gedreht wird, bis ein in Figur 2 nicht eingezeichneter Sensor die korrekte Position meldet.

Bei einer alternativen Gestaltung sind an Stelle des Vorratsbehälters 60 mehrere Vorratsbehälter vorgesehen, damit der Benutzer die Auswahl zwischen verschiedenen Kaffeesorten hat, die z.B. spezifisch zum Aufbrühen von Filterkaffee, Caffè Crema und Espresso geeignet sind.

Bei der Benutzung der Brühmaschine 30 wird zunächst Brühsubstanz in den Brühsubstanzträger 32 eingefüllt, wie bereits erläutert. Dann wählt der Benutzer einen Brühdruck aus, indem er einen vorgegebenen Geschwindigkeitsbereich für die Drehbewegung des Brühsubstanzträgers 32 eingibt. Das Brühgetränk, also z.B. Filterkaffee, Caffè Crema oder Espresso, wird dann ähnlich wie in dem Ausführungsbeispiel gemäß Figur 1 hergestellt. Im Unterschied zu dem Ausführungsbeispiel gemäß Figur 1 sind die Durchtrittsöffnungen 58 im Mantel 34 des Brühsubstanzträgers 32 jedoch bereits von vornherein vorhanden. Im Ausführungsbeispiel haben die Durchtrittsöffnungen 58 wiederum eine Filterfunktion.

Nach Beendigung des Brühvorgangs fährt im Ausführungsbeispiel der Heißwassereinlauf 46 nach oben, so dass der Benutzer den Brühsubstanzträger 32 entnehmen und reinigen kann.

## Patentansprüche

1. Brühmaschine zur Extraktion einer Brühsubstanz mittels Heißwasser, mit
- einer Heißwassereinrichtung (16; 46), die zur Bereitstellung von Heißwasser eingerichtet ist,
- einer Dreheinrichtung (10; 40) für einen Brühsubstanzträger (2; 32), die von einem Antrieb (14; 44) zu einer Rotationsbewegung um eine Drehachse antreibbar ist, und
- einer Auffangeinrichtung (20; 50), die einen von der Dreheinrichtung (10; 40) angetriebenen Brühsubstanzträger (2; 32) umgibt und dazu eingerichtet ist, unter Zentrifugalkräften aus dem Brühsubstanzträger (2; 32) austretendes Brühgetränk aufzufangen und zu einem Auslass (24; 54) zu leiten, der für das Brühgetränk unter Schwerkraft passierbar ist,
**gekennzeichnet durch** eine Steuerung, die dazu eingerichtet ist, die Dreheinrichtung (10, 14; 40, 44) in mindestens zwei verschiedenen, vorwählbaren Geschwindigkeitsbereichen anzutreiben.

2. Brühmaschine nach Anspruch 1, **dadurch gekennzeichnet, dass** die Drehachse quer zur Horizontalen ausgerichtet ist, vorzugsweise allgemein vertikal.

3. Brühmaschine nach Anspruch 1 oder 2, **dadurch gekennzeichnet, dass** die Steuerung dazu eingerichtet ist, die Dreheinrichtung (10, 14; 40, 44) in drei verschiedenen, vorwählbaren Geschwindigkeitsbereichen anzutreiben, um an dem Brühsubstanzträger (2; 32) unterschiedlich große Zentrifugalkräfte zu erzeugen, die einem Brühdruck zum Brühen von Filterkaffee, einem Brühdruck zum Brühen von Caffè Crema und einem Brühdruck zum Brühen von Espresso entsprechen.

4. Brühmaschine nach einem der Ansprüche 1 bis 3, **dadurch gekennzeichnet, dass** der Brühsubstanzträger (32) eine Komponente der Brühmaschine (30) ist, wobei der Brühsubstanzträger (32) vorzugsweise von der Dreheinrichtung (40) separierbar ist.

5. Brühmaschine nach Anspruch 4, **dadurch gekennzeichnet, dass** der Brühsubstanzträger (32) eine zylinderähnliche Form mit einem Mantel (34) und einer mit der Drehachse zusammenfallenden Längsachse aufweist, wobei der Mantel (34) mit Durchtrittsöffnungen (58) für das Brühgetränk versehen ist, die vorzugsweise als Filteröffnungen ausgestaltet sind.

6. Brühmaschine nach Anspruch 5 in Verbindung mit Anspruch 2, **dadurch gekennzeichnet, dass** der Brühsubstanzträger (32) eine Bodenstruktur (38) und einen Deckel (36) aufweist, über den der Innenraum des Brühsubstanzträgers (32) mit Brühsubstanz befüllbar ist und der für das Heißwasser durchgängig ist, vorzugsweise über eine zentrale Öffnung (37) für einen Heißwassereinlauf (46).

7. Brühmaschine nach einem der Ansprüche 4 bis 6, **gekennzeichnet durch** eine Brühsubstanzquelle (60, 62), die über eine Brühsubstanzzuleitung (64, 66) mit dem Brühsubstanzträger (32) in Verbindung steht, wobei die Brühsubstanzquelle (60, 62) eine der folgenden Einrichtungen aufweist: Vorratsbehälter für eine Sorte Mahlkaffee, Vorratsbehälter für mehrere Sorten Mahlkaffee, Mahlwerk für Kaffeebohnen, Mahlwerk (62) für Kaffeebohnen mit vorgeschaltetem Vorratsbehälter (60) für eine Sorte Kaffeebohnen, Mahlwerk für Kaffeebohnen mit vorgeschaltetem Vorratsbehälter für mehrere Sorten Kaffeebohnen.

8. Brühmaschine nach Anspruch 7, **dadurch gekennzeichnet, dass** der Brühsubstanzleitung (64, 66) ein Brühsubstanzportionierer (64) zugeordnet ist.

9. Brühmaschine nach einem der Ansprüche 1 bis 3, **dadurch gekennzeichnet, dass** der Brühsubstanzträger (2) keine Komponente der Brühmaschine (1) ist und als in die Dreheinrichtung (10) einsetzbare Portionskapsel (2) ausgestaltet ist, die eine Brühsubstanz enthält.

10. System aus einer Brühmaschine (1) nach Anspruch 9 und einer Portionskapsel (2), die als Brühsubstanzträger (2) für die Brühmaschine (1) eingerichtet ist und eine Brühsubstanz enthält und in die Dreheinrichtung (10) einsetzbar ist.

11. System nach Anspruch 10, **dadurch gekennzeichnet, dass** die Portionskapsel (2) eine zylinderähnliche Grundform mit einem Mantel (4), einem Deckel (6) und einem Boden (8) aufweist.

12. System nach Anspruch 11, **dadurch gekennzeichnet, dass** die Brühmaschine (1) eine Perforiereinrichtung (26) aufweist, die dazu eingerichtet ist, den Mantel (4) einer in die Dreheinrichtung (10) eingesetzten Portionskapsel (2) mit einer Anzahl von Perforationen (28) zu versehen, wobei die Perforiereinrichtung (26) vorzugsweise eine Anzahl von Perforationsnadeln (26) aufweist, die allgemein radial zur Drehachse der Dreheinrichtung (10) auf die Drehachse zu verschiebbar sind.

13. System nach Anspruch 11**, dadurch gekennzeichnet, dass** der Mantel der Portionskapsel bereits im Lieferzustand der Portionskapsel mit einer Anzahl von Perforationen versehen ist, die vorzugsweise im Lieferzustand von einer entfernbaren Abdeckung verschlossen sind.

14. System nach einem der Ansprüche 11 bis 13, **dadurch gekennzeichnet, dass** die Brühmaschine (1) einen mit der Heißwassereinrichtung in Verbindung stehenden und zur Drehachse der Dreheinrichtung ausgerichteten Injektor (16) aufweist, mit dem der Deckel (6) einer in die Dreheinrichtung (10) eingesetzten Portionskapsel (2) perforierbar und Heißwasser in den Innenraum der Portionskapsel (2) einspritzbar ist.

15. System nach einem der Ansprüche 10 bis 14, **dadurch gekennzeichnet, dass** unterschiedliche Sorten von Portionskapseln (2) vorgesehen sind, vorzugsweise eine Sorte zum Brühen von Filterkaffee, eine Sorte zum Brühen von Caffè Crema und eine Sorte zum Brühen von Espresso.
